(19) Europäisches Patentamt
European Patent Office
Office européen des brevets

(11) EP 0 951 503 B1

(12) **FASCICULE DE BREVET EUROPEEN**

(45) Date de publication et mention de la délivrance du brevet:
**16.02.2005 Bulletin 2005/07**

(21) Numéro de dépôt: **97953967.3**

(22) Date de dépôt: **29.12.1997**

(51) Int Cl.[7]: **C08K 3/00**, C08L 83/04
// (C08K3/00, 3:08, 3:22),
(C08K3/00, 3:08, 3:22, 3:22)

(86) Numéro de dépôt international:
**PCT/FR1997/002444**

(87) Numéro de publication internationale:
**WO 1998/029488 (09.07.1998 Gazette 1998/27)**

(54) **UTILISATION DE MELANGES A BASE DE Pt ET DE COMPOSE DE METAUX DE TRANSITION AUTRES QUE LE Pt POUR AMELIORER LES PROPRIETES DE RESISTANCE A L'ARC DES ELASTOMERES SILICONES**

VERWENDUNG VON MISCHUNGEN AUF BASIS VON PLATIN UND VON PLATIN VERSCHIEDENEN ÜBERGANGSMETALLVERBINDUNGEN ZUR VERBESSERUNG DER LICHTBOGENBESTÄNDIGKEITSEIGENSCHAFTEN VON SILIKONELASTOMEREN

USE OF MIXTURES WITH BASE OF Pt AND OF TRANSITION METAL COMPOUNDS OTHER THAN Pt FOR IMPROVING THE RESISTANCE TO ARC TRACKING AND TO ARC EROSION OF SILICON ELASTOMERS

(84) Etats contractants désignés:
**AT BE CH DE DK ES FI FR GB GR IE IT LI LU NL PT SE**

(30) Priorité: **31.12.1996 FR 9616384**

(43) Date de publication de la demande:
**27.10.1999 Bulletin 1999/43**

(73) Titulaire: **RHODIA CHIMIE**
**92408 Courbevoie Cédex (FR)**

(72) Inventeurs:
- **DUBOUIS, Raymond**
**F-69960 Corbas (FR)**
- **POUCHELON, Alain**
**F-69330 Meyzieu (FR)**
- **PUSINERI, Christian**
**F-69360 Serezin du Rhône (FR)**

(74) Mandataire: **Trolliet, Maurice**
**RHODIA SERVICES**
**Direction de la Propriété Industrielle**
**CRIT-Carrières - BP 62**
**69192 Saint-Fons Cédex (FR)**

(56) Documents cités:
**EP-A- 0 347 349** **US-A- 4 701 488**
**US-A- 5 543 450**

- **DATABASE WPI Section Ch, Week 7809 Derwent Publications Ltd., London, GB; Class A26, AN 78-16883A XP002041952 & JP 53 006 356 A (TOSHIBA SILICONE KK) , 20 janvier 1978**
- **DATABASE WPI Section Ch, Week 9210 Derwent Publications Ltd., London, GB; Class A26, AN 92-077272 XP002041953 & JP 04 023 865 A (SHINETSU CHEM IND CO LTD) , 28 janvier 1992**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a pour objet l'utilisation, comme additifs permettant d'améliorer les propriétés de résistance au cheminement d'arc et à l'érosion sous arc :

- de mélanges à base de platine et de composé(s) d'un métal (ou de métaux) de transition autre(s) que le platine et judicieusement choisi(s),
- dans les compositions polyorganosiloxanes pour l'obtention d'élastomères silicones, soit réticulant à température ambiante ou à la chaleur par des réactions de polyaddition en présence d'un catalyseur métallique (compositions appelées RTV, LSR ou EVC de polyaddition), soit réticulant à température élevée sous l'action de peroxydes organiques (compositions appelées EVC).

On entend par "propriétés de résistance au cheminement d'arc et à l'érosion sous arc", les propriétés de ce type des élastomères silicones obtenus par réticulation des compositions polyorganosiloxanes appelées RTV, LSR, EVC de polyaddition ou EVC.

Les expressions RTV, LSR, EVC sont bien connues de l'homme de métier : RTV est l'abréviation de "Room Temperature Vulcanizing" ; LSR est l'abréviation de "Liquid Silicone Rubber" ; et EVC est l'abréviation de "Elastomère Vulcanisable à Chaud".

il est connu, d'après JP-A-76/035 501, d'utiliser un mélange de platine et d'un oxyde mixte de fer de formule $(FeO)_x$, $(Fe_2O_3)_y$ où le rapport x / y est compris entre 0,05 / et 1 / 1, pour améliorer les propriétés de résistance à la flamme des élastomères silicones obtenus à partir de compositions EVC.

Il est connu, d'après FR-A-2 166 313 et EP-A-0 347 349, d'utiliser un mélange de platine avec au moins un oxyde de métal rare, en particulier un mélange de platine avec de l'oxyde de cérium-IV $CeO_2$, pour améliorer les propriétés de résistance à la flamme des élastomères silicones obtenus à partir de compositions EVC (FR-A-2 166 313) ou de compositions RTV (EP-A-0 347 349).

La Demanderesse a maintenant trouvé que les compositions polyorganosiloxanes RTV, LSR, EVC de polyaddition ou EVC contenant ce type d'additif à base d'un mélange de platine avec un oxyde mixte de fer ou un oxyde de cérium-IV présente, de plus, de bonnes propriétés de résistance au cheminement d'arc et à l'érosion sous arc ; la Demanderesse a encore trouvé d'autres additifs que les mélanges précités, qui peuvent être utilisés pour l'obtention d'élastomères silicones ayant de bonnes propriétés de résistance au cheminement d'arc et à l'érosion sous arc, tout en ayant de bonnes propriétés de résistance à la flamme et de bonnes propriétés mécaniques, que ces élastomères aient été obtenus à partir de compositions polyorganosiloxanes de type RTV, LSR, EVC de polyaddition ou EVC.

La présente invention concerne donc l'utilisation, comme additif d'amélioration des propriétés de résistance au cheminement d'arc et à l'érosion sous arc :

- d'un mélange A, B ou C formé de :
  - * s'agissant du mélange A :

    A1 : platine ; et
    A2 : au moins un composé inorganique A2.1 d'un métal à plusieurs degrés d'oxydations pris dans le groupe formé par V, Cr, Mn, Fe, Co, Ni et Cu, dans lequel l'atome de métal se trouve au degré d'oxydation supérieur à zéro, le plus bas possible (en abréviation DOX mini) ; ou
    A3 : une combinaison d'au moins un composé inorganique A2.1 avec au moins un composé inorganique A2.2 dans lequel l'atome de V, Cr, Mn, Fe, Co, Ni ou Cu se trouve à un degré d'oxydation supérieur à DOX mini ;

  - * s'agissant du mélange B :

    B1 : platine ; et
    B2 : au moins un composé inorganique B2.1 du cérium-IV ou du lanthane-III: ou
    B3 : une combinaison d'au moins un composé inorganique B2.1 avec au moins un composé inorganique B2.2 du titane-IV ;

  - * s'agissant du mélange C :

    C1 : platine ; et
    C2 : une combinaison du constituant A2 ou A3 avec le constituant B2 ou B3.

- dans une composition polyorganosiloxane D pour l'obtention d'un élastomère silicone, soit réticulant à température ambiante ou à la chaleur par des réactions de polyaddition en présence d'un catalyseur métallique, soit réticulant à température élevée sous l'action de péroxyde(s) organique(s).

Le platine, constituant A1, B1 et C1 des mélanges A, B et C, peut être notamment

- sous forme :
  . de platine métallique (élémentaire), ou
- sous forme :
  . d'acide chloroplatinique $H_2PtCl_6$, $6H_2O$; tel que décrit dans le brevet US-A-2 823 218,
  . d'acide chloroplatinique anhydre,
  . de $PtCl_2 [P(CH_2 - CH_2 - CH_3)_3]_2$
  . de complexes tels que ceux de formule $(PtCl_2, \text{oléfine})_2$ et $H(PtCl_3, \text{oléfine})$ décrits dans le brevet US-A-3 159 601, l'oléfine du complexe représentant notamment l'éthylène, le propylène, le butylène, le cyclohexène, le styrène,
  . de $(PtCl_2, C_3H_6)_2$, complexe de chlorure de platine et de cyclopropane, décrit dans le brevet américain US-A-3 159 662,
  . des produits, composés ou complexes suivants :

$Pt(CH_3CN)_2Cl_2$, $[Pt(CH_3CN)_2(NH_3)_4]Cl_2$
$Pt(NH_3)_2Cl_2$, $K[PtCl_3(CH_2CH_2CH_2OH)]$
$PtBr_2(C_2H_4)_2$, $K[PtBr_3(C_2H_4)]$, $PtCl_2C_2C_2H_4$
$(CH_3)_2C{=}CH_2.PtCl_2$, $H_2Pt(CN)_4$, $5H_2O$
$H(PtCl_3(CH_3CN)]$, $Pt(NH_3)_2(CNS)_2$
$[Pt(NH_3)_4].[PtCl_4]$, $PtCl_2[P(CH_2CH_3)_3]_2$, $PtCl_2.PCl_3$
$PtCl_2,P(OH)_3$, $PtCl_2.P(OCH_2CH_3)_3$
$PtCl_2,[P(OCH_2CH_3)_3]_2$, $Pt(OOCCH_2SCH_2CH_3)_2$
$Pt(CN)_3,(CH_3)_4$ Pt, $(CH_3)_3Pt\text{-}Pt(CH_3)_3$

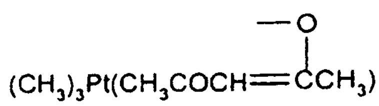

$PtCl_2CO$ et $PtBr_2CO$.

La quantité de platine, exprimé en partie en poids de platine élémentaire, se situe dans l'intervalle allant généralement de 1 à 250 ppm et, de préférence, de 3 à 100 ppm, par rapport au poids total du (ou des) constituant(s) polyorganosiloxane(s) des compositions durcissables D. Dans les cas des compositions D de type RTV, LSR et EVC de polyaddition, le constituant platine correspond avantageusement au platine catalytique qui est normalement mis en oeuvre pour réaliser les réactions de polyaddition responsables de la réticulation de ces compositions.
A propos des constituants A2 ou A3, B2 ou B3 et C2 des mélanges A, B et C, par l'expression "composé inorganique", on entend définir plus particulièrement les oxydes et les hydroxydes ; ces composés sont en général des solides, anhydres ou non, qui sont utilisés sous forme de particules ayant un diamètre moyen n'excédant pas 20 µm et, de préférence, allant de 0,02 à 5 µm, et une surface spécifique BET supérieure ou égale à 0,2 $m^2/g$ et, de préférence, allant de 0,5 à 100 $m^2/g$.
Lorsque l'on parle d'ùn groupe de particules ayant un diamètre moyen situé dans un intervalle donné, il faut comprendre que plus de 50 % en poids des particules a un diamètre situé dans l'intervalle en question.
La surface spécifique BET est déterminée selon la méthode BRUNAUER, EMMET, TELLER décrite dans "The Journal of American Chemical Society, vol. 80, page 309 (1938)" correspondant à la norme AFNOR NFT 45007 de novembre 1987.
Les quantités des constituants A2 ou A3, B2 ou B3 et C2 des mélanges A, B et C, exprimées en partie en poids du constituant, se situent dans l'intervalle allant généralement de 0,5 à 30 et, de préférence, de 1 à 15 parties en poids pour 100 parties du (ou des) constituants) polyorganosiloxane(s) des compositions durcissables D.
Dans le constituant A3 (combinaison), le rapport entre la quantité pondérale du (ou des) composé(s) A2.1 et celle du (ou des) composé(s) A2.2 se situe dans l'intervalle allant généralement de 0,1 / 1 à 9 / 1 et, de préférence de

0,25 /1 à 4 / 1.

Dans le constituant 83 (combinaison), le rapport entre la quantité pondérale du (ou des) composé(s) B2.1 et celle du (ou des) composé(s) 82.2 se situe dans l'intervalle allant généralement de 0,6 / 1 à 6 / 1 et, de préférence, de 0,8 /1 à 4 /1.

Dans le constituant C2 (combinaison), le rapport entre la quantité pondérale du constituant A2 ou A3 et celle du constituant B2 ou B3 se situe dans l'intervalle allant généralement de 0,02 /1 à 1 / 1 et, de préférence, de 0,05 / 1 à 0.5 /1.

Conformément à une modalité de mise en oeuvre de la présente invention qui convient bien, on fait appel, comme additif :

① à un mélange A du type A1 + A3 où : le constituant A1 est du platine sous forme de complexe ou de composé du platine ; et le constituant A3 consiste dans une combinaison de FeO avec $Fe_2O_3$;
② à un mélange B de type B1 + B2 où : le constituant B1 a la signification du constituant A1 de ① ; et le constituant B2 consiste dans l'oxyde et/ou l'hydroxyde de cérium-IV ;
③ à un mélange B de type B1 + B3 où : le constituant B1 a la signification du constituant A1 de ① ; et le constituant B3 consiste dans une combinaison de l'oxyde et/ou l'hydroxyde de cérium-IV avec l'oxyde de titane $TiO_2$ ; ou
④ à un mélange C où : le constituant C1 a la signification du constituant A1 de ① ; et le constituant C2 consiste dans une combinaison du constituant B3 cité sous ③ avec le constituant A3 cité sous ① ;

les quantités des divers constituants A1, A3, B1, B2, B3, C1 et C2 et les rapports pouvant exister entre les quantités de certains d'entre eux dans le cas des combinaisons se situent dans les intervalles larges dits "allant généralement de (...) à (...)" mentionnés ci-avant.

Conformément à une modalité de mise en oeuvre de la présente invention qui convient plus particulièrement bien, on fait appel, comme additif, à l'un des mélanges cités sous ① , ② , ③ et ④ pour lequel les quantités des divers constituants et les rapports pouvant exister entre les quantités de certains d'entre eux dans le cas des combinaisons se situent dans les intervalles étroits dits "allant de préférence de (...) à (...)" mentionnés ci-avant.

Les compositions polyorganosiloxanes durcissables D visées dans le cadre de la présente invention, présentées en un seul ou en plusieurs emballage(s) (mono- ou multicomposants), renferment un constituant principal formé d'un ou plusieurs constituant(s) polyorganosiloxane(s), un catalyseur approprié et éventuellement un ou plusieurs composé(s) pris dans le groupe formé par notamment : les charges renforçantes ou semi-renforçantes ou de bourrage ou servant à adapter la rhéologie des compositions durcissables, les agents de réticulation, les agents d'adhérence, les agents plastifiants, les agents inhibiteurs du catalyseur et les agents de coloration.

Les polyorganosiloxanes, constituants principaux des compositions D visées dans la cadre de l'invention, peuvent être linéaires, ramifiés ou réticulés, et comporter des radicaux hydrocarbonés et/ou des groupements réactifs consistant dans des groupements alkényles et des atomes d'hydrogène. A noter que les compositions polyorganosiloxanes sont amplement décrites dans la littérature et notamment dans l'ouvrage de Watter NOLL : "Chemistry and Technology of Silicones", Academic Press, 1968, 2ème édition, pages 386 à 409.

Plus précisément les polyorganosiloxanes, constituants principaux des compositions D visées dans le cadre de l'invention, sont constitués de motifs siloxyles de formule générale :

$$R_nSiO_{\frac{4-n}{2}} \qquad (I)$$

et/ou de motifs siloxyles de formule :

$$Z_xR_ySiO_{\frac{4-x-y}{2}} \qquad (II)$$

formules dans lesquelles les divers symboles ont la signification suivante :

- les symboles R, identiques ou différents, représentent chacun un groupement de nature hydrocarbonée non hydrolysable, ce radical pouvant être :
  * un radical alkyle, halogénoalkyle ayant de 1 à 5 atomes de carbone et comportant de 1 à 6 atomes de chlore et/ou de fluor,
  * des radicaux cycloalkyles et halogénocycloalkyles ayant de 3 à 8 atomes de carbone et contenant de 1 à 4 atomes de chlore et/ou de fluor,

* des radicaux aryles, alkylaryles et halogénoaryles ayant de 6 à 8 atomes de carbone et contenant de 1 à 4 atomes de chlore et/ou de fluor,
* des radicaux cyanoalkyles ayant de 3 à 4 atomes de carbone ;

- les symboles Z, représentent chacun un atome d'hydrogène ou un groupe alkényle en $C_2$-$C_6$ ;
- n = un nombre entier égal à 0, 1, 2 ou 3 ;
- x = un nombre entier égal à 0, 1, 2 ou 3 ;
- y = un nombre entier égal à 0, 1, ou 2 ;
- la somme x + y se situe dans ('intervalle allant de 1 à 3.

A titre illustratif, on peut citer parmi les radicaux organiques R, directement liés aux atomes de silicium : les groupes méthyle ; éthyle ; propyle ; isopropyle ; butyte ; isobutyle ; n-pentyle ; t-butyle ; chlorométhyle.; dichlorométhyle ; α-chloroéthyle ; α,β-dichloroéthyle ; fluorométhyle ; difluorométhyle ; α,β-difluoroéthyle ; trifluoro-3,3,3 propyle ; trifluoro cyclopropyle ; trifluoro-4,4,4 butyle ; hexafluoro-3,3,4,4,5,5 pentyle ; β-cyanoéthyle ; γ-cyanopropyle ; phényle : p-chlorophényle ; m-chlorophényle ; dichloro-3,5 phényle ; trichlorophényle ; tétrachlorophényle ; o-, p- ou m-tolyie ; α,α,α-trifluorotolyle ; xylyles comme diméthyl-2,3 phényle, diméthyl-3,4 phényle,

Préférentiellement, les radicaux organiques R liés aux atomes de silicium sont des radicaux méthyle, phényle, ces radicaux pouvant être éventuellement halogénés ou bien encore des radicaux cyanoalkyle.

Les symboles Z sont des atomes d'hydrogène ou des groupes alkényles qui sont de préférence des groupes vinyles.

La nature du polyorganosiloxane et donc les rapports entre les motifs siloxyles (I) et (II) et la répartition de ceux-ci est comme on le sait choisie en fonction du traitement de réticulation qui sera effectué sur la composition durcissable en vue de sa transformation en élastomère.

Les compositions polyorganosiloxanes D, bicomposantes ou monocomposantes, réticulant à température ambiante ou à la chaleur par des réactions de polyaddition, essentiellement par réaction de groupements hydrogénosilylés sur des groupements alkényl-silylés, en présence d'un catalyseur métallique, généralement à base de platine, sont décrites par exemple dans les brevets US-A-3 220 972, 3 284 406. 3 436 366, 3 697 473 et 4 340 709. Les polyorganosiloxanes entrant dans ces compositions sont en général constitués par des couples à base d'une part d'un polysiloxane linéaire, ramifié ou réticulé constitué de motifs (II) dans lesquels le reste Z représente un groupement alkényle en $C_2$ - $C_6$ et où x est au moins égal à 1, éventuellement associés à des motifs (I), et d'autre part d'un hydrogéno-polysiloxane linéaire, ramifié ou réticulé constitué de motifs (II) dans lesquels le reste Z représente alors un atome d'hydrogène et où x est au moins égal à 1, éventuellement associés à des motifs (I).

Dans le cas des compositions D réticulant par des réactions de polyaddition appelées RTV, le (ou les) constituant(s) polyorganosiloxane(s) porteur(s) de groupements alkényl-silylés présentent avantageusement une viscosité à 25°C au plus égale à 100 000 mPa.s et, de préférence, comprise entre 400 et 100 000 mPa.s.

Dans le cas des compositions D réticulant par des réactions de polyaddition appelées LSR, le (ou les) constituant(s) polyorganosiloxane(s) porteur(s) de groupements alkényl-silylés ont une viscosité à 25°C supérieure à 100 000 mPa.s, se situant de préférence dans l'intervalle allant d'une valeur supérieure à 100 000 mPa.s à 500 000 mPa.s.

Dans le cas des compositions D réticulant par des réactions de polyaddition appelées EVC de polyaddition, le (ou les) constituant(s) polyorganosiloxane(s) porteur(s) de groupements alkényl-silylés ont une viscosité à 25°C supérieure à 500 000 mPa.s et, de préférence comprise entre 1 million de mPa.s et 30 millions de mPa.s et même davantage.

Dans les cas des compositions polyorganosiloxanes D appelées RTV, LSR ou EVC de polyaddition, le (ou les) constituant(s) polyorganosiloxane(s) porteur(s) de groupements hydrogéno-silylés ont généralement une viscosité à 25°C au plus égale à 10 000 mPa.s et, de préférence, comprise entre 5 et 1 000 mPa.s.

Il peut aussi s'agir encore de compositions D durcissables à température élevée sous l'action de peroxydes organiques. Le polyorganosiloxane ou gomme entrant dans de telles compositions appelées EVC est alors constitué essentiellement de motifs siloxyles (I), éventuellement associés à des motifs (II) dans lesquels le reste Z représente un groupement alkényle en $C_2$ - $C_6$ et où x est égal à 1. De tels EVC sont par exemple décrits dans les brevets US-A-3 142 655, 3 821 140, 3 836 489 et 3 839 266.

Le constituant polyorganosiloxane de ces compositions EVC présente avantageusement une viscosité à 25°C au moins égale à 1 million de mPa.s et, de préférence, comprise entre 2 millions et 30 millions de mPa.s et même davantage.

Les compositions durcissables D visées dans le cadre de l'invention peuvent comporter en outre - à côté du (ou des) constituant(s) polyorganosiloxane(s), du catalyseur et éventuellement de l'agent de réticulation et/ou de l'agent d'adhérence et/ou de l'agent de coloration - des charges renforçantes ou semi-renforçantes ou de bourrage ou servant à adapter la rhéologie, qui sont de préférence choisies parmi les charges siliceuses.

Les charges renforçantes sont choisies parmi les silices de combustion et les silices de précipitation. Elles ont une surface spécifique, mesurée selon les méthodes BET, d'au moins 50 $m^2/g$, de préférence supérieure à 100 $m^2/g$, et une dimension moyenne des particules inférieure à 0,1 micromètre (μm).

Ces silices peuvent être incorporées de préférence telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthytvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 10 % environ.

Les charges semi-renforçantes ou de bourrage ou servant à adapter la rhéologie ont une surface spécifique BET inférieure à 100 $m^2$ / g et un diamètre moyen particulaire supérieur à 0,1 μm et sont choisies de préférence parmi le quartz broyé, les argiles calcinées et les terres de diatomées.

On peut utiliser, quand on en a besoin, de 0,5 à 120 % en poids, de préférence de 1 à 100 % en poids de charge(s), par rapport au poids du (ou des) constituant(s) organopolysiloxane(s) des compositions D.

Des compositions polyorganosiloxanes D préférées dans le cadre de la présente invention sont celles, monocomposantes ou bicomposantes, réticulant à température ambiante ou à la chaleur par des réactions de polyaddition, appelées RTV, qui comprennent :

(a) 100 parties en poids d'au moins un polydiorganosiloxane choisi parmi les homopolymères et les copolymères linéaires présentant par molécule au moins 2 groupes vinyles liés à des atomes de silicium différents, situées dans la chaîne et/ou en bouts de chaîne, dont les autres radicaux organiques liés aux atomes de silicium sont choisis parmi les radicaux méthyle, éthyle et phényle, au moins 60 % molaire de ces autres radicaux (et de préférence la totalité de ces autres radicaux) étant des radicaux méthyle, et présentant une viscosité allant de 400 à 100 000 mPa.s à 25°C ;
(b) au moins un polyorganohydrogénosiloxane choisi parmi les homopolymères et les copolymères linéaires ou cycliques présentant par molécule au moins 2 atomes d'hydrogène liés à des atomes de silicium différents et dont les radicaux organiques liés aux atomes de silicium sont choisis parmi les radicaux méthyle, éthyle et phényle, au moins 60 % molaire de ces radicaux (et de préférence la totalité de ces radicaux) étant des radicaux méthyle, et présentant une viscosité allant de 5 à 1 000 mPa.s à 25°C, le réactif (b) étant utilisé en quantité telle que le rapport molaire des fonctions hydrure de (b) sur les groupes vinyle de (a) est compris entre 1,1 et 4 ;
(c) une quantité catalytiquement efficace d'un catalyseur au platine
(d) 0 à 120 partie(s) en poids, de préférence de 0 à 100 parties en poids, de charge(s) siliceuse(s) pour 100 parties en poids de l'ensemble des polyorganosiloxanes (a) + (b).

Selon une variante de mise en oeuvre, jusqu'à 100 % en poids du réactif (a) est remplacé par une résine polyorganosiloxane comportant dans sa structure de 0,1 à 20 % en poids de groupe(s) vinyle(s), ladite structure présentant au moins deux motifs différents choisis parmi les motifs M (triorganosiloxyle), D (diorganosiloxyle), T (monoorganosiloxyle) et Q ($SiO_{4/2}$), l'un au moins de ces motifs étant un motif T ou Q, le (ou les) groupe(s) vinyle (s) pouvant être porté(s) par les motifs M, D et/ou T.

Le réactif (a) peut être avantageusement un polydiorganosiloxane linéaire dont la chaîne est constituée essentiellement de motifs (1) où n = 2, cette chaîne étant bloquée à chaque extrémité par un motif (II) où Z = vinyle et où x = 1 et y = 2 .

Le réactif (b) peut être avantageusement : un polyorganohydrogénosiloxane linéaire, comportant dans sa structure au moins 3 atomes d'hydrogène liés au silicium, dont la chaîne est constituée essentiellement de motifs (II) où Z = H et où x = y = 1, éventuellement associés à des motifs (I) où n = 2, cette chaîne étant bloquée à chaque extrémité par un motif (II) où Z = H et où x = 1 et y = 2 ou par un motif (I) où n = 3 ; ou un mélange dudit polyorganohydrogénosiloxane avec un autre polyorganohydrogénosiloxane linéaire dont la chaîne est constituée essentiellement de motifs (1) où n = 2, cette chaîne étant bloquée à chaque extrémité par un motif (II) où Z = H et où x = 1 et y = 2.

La quantité pondérale de catalyseur (c), calculée en partie en poids de platine-métal est généralement comprise entre 1 et 250 ppm, de préférence entre 3 et 100 ppm, basés sur le poids de l'ensemble des organosiloxanes (a) + (b).

D'autres compositions polyorganosiloxanes D préférées sont celles, monocomposantes ou bicomposantes, réticulant à la chaleur par des réactions de polyaddition, appelées compositions LSR. Ces compositions répondent aux définitions données ci-avant à propos des compositions préférées appelées RTV, sauf en ce qui concerne la viscosité du réactif polydiorganosiloxane vinylé (a) qui se situe cette fois dans l'intervalle allant d'une valeur supérieure à 100 000 mPa.s à 500 000 mPa.s.

D'autres compositions polyorganosiloxanes D préférées sont celles, monocomposantes ou bicomposantes,

réticulant à la chaleur par des réactions de polyaddition, appelées compositions EVC de polyaddition, qui comprennent :

(a') 100 parties en poids d'une gomme polydiorgancisiloxane qui est un homopolymère ou copolymère linéaire présentant par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité supérieure à 500.000 mPa.s à 25°C et de préférence d'au moins 1 million de mPa.s ;
(b') au moins un polyorganohydrogénosiloxane choisi parmi les homopolymères et les copolymères linéaires, cycliques ou en réseau présentant par molécule au moins 3 atomes d'hydrogène liés à des atomes de silicium différents et dont les radicaux organiques liés aux atomes de silicium sont choisis parmi les radicaux méthyle, éthyle, phényle, au moins 60 % molaire de ces radicaux (et de préférence la totalité de ces radicaux) étant des radicaux méthyle, et présentant une viscosité allant de 5 à 1 000 mPa.s à 25°C, le réactif (b') étant utilisé en quantité telle que le rapport molaire des fonctions hydrure de (b') sur les groupes vinyle de (a') est compris entre 0,4 et 10 et de préférence entre 1,1 et 4 ;
(c') une quantité catalytiquement efficace d'un catalyseur au platine ;
(d') 0,5 à 120 partie(s) en poids, de préférence de 1 à 100 parties en poids, de charge(s) siliceuse(s) pour 100 parties en poids de l'ensemble des polyorganosiloxanes (a') + (b').

La gomme (a') est constituée, le long de sa chaîne, de motifs (I) où n = 2, éventuellement associés à des motifs (II) où Z = vinyle et où x = y = 1, et elle est bloquée à chaque extrémité de sa chaîne par un motif (II) où Z = vinyle et où x = 1 et y = 2 ou par un motif (I) où n = 3.

De façon avantageuse, on met en oeuvre à titre de constituant (b'), au moins un polyorganohydrogénosiloxane linéaire dont la chaîne est constituée essentiellement de motifs (II) où Z = H et où x = y = 1, éventuellement associés à des motifs (I) où n = 2, cette chaîne étant bloquée à chaque extrémité par un motif (II) où Z = H et où x = 1 et y = 2 ou par un motif (I) où n = 3.

La quantité pondérale de catalyseur (c'), exprimée en partie en poids de platine-métal par rapport au poids de la gomme (a') et du composé hydrogéno-silylé (b'), est comprise entre 1 et 250 ppm et, de préférence, entre 3 et 100 ppm.

Les compositions silicones D peuvent comporter en outre, à côté des constituants (a'), (b'), (c') et (d'), de 1 à 10 parties en poids d'huile(s) polydiméthylsiloxane(s) (e') à extrémités silanols de viscosité à 25°C comprise entre 10 et 1 000 mPa.s, pour 100 parties de gomme (a').

Si l'on a besoin de retarder la réticulation, on peut ajouter à la composition polyorganosiloxane D réticulant par des réactions de polyaddition appelée RTV, LSR ou EVC de polyaddition, un inhibiteur du catalyseur au platine. Ces inhibiteurs sont connus. On peut en particulier utiliser les amines organiques, les silazanes, les oximes organiques, les diesters de diacides carboxyliques, les cétones acétyléniques et surtout, et il s'agit là des inhibiteurs préférés, les alcools acétyléniques (cf. par exemple FR-A-1 528 464, 2 372 874 et 2 704 553) et les polydiorganosiloxanes cycliques constitués essentiellement de motifs (II) où Z = vinyle et où x = y = 1, éventuellement associés à des motifs (I) où n = 2. L'inhibiteur, quand on en utilise un, est engagé à raison de 0,005 à 5 parties en poids, de préférence 0,01 à 3 en poids, pour 100 parties du polyorganosiloxane (a) ou de la gomme (a').

D'autres compositions polyorganosiloxanes D préférées sont encore celles, monocomposantes, appelées EVC, comprenant :

(a") 100 parties en poids d'une gomme polydiorganosiloxane qui est un homopolymère ou un copolymère linéaire présentant par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité d'au moins 1 million de mPa.s à 25°C, et de préférence d'au moins 2 millions de mPa.s ;
(b") 0,1 à 7 parties en poids d'un peroxyde organique ;
(c") 0,5 à 120 parties en poids, de préférence de 1 à 100 parties en poids, de charge(s) siliceuse(s) pour 100 parties en poids de gomme (a").

La gommes (a") est constitué, le long de sa chaîne, de motifs (I) où n = 2, éventuellement associés à des motifs (II) où Z = vinyle et où x = y = 1, et elle est bloquée à chaque extrémité de sa chaîne par un motif (II) où Z = vinyle et où x = 1 et y = 2 ou par un motif (I) où n = 3 ; cependant la présence en mélange avec ces motifs conformes, de motifs de structure différente, par exemple de formule (I) avec n = 1 et/ou $SiO_{4/2}$ et/ou de formule (II) où Z = vinyle et où x = 1 et y = 0, n'est pas exclue dans la proportion d'au plus 2 % par rapport au nombre total des motifs conformes.

Les peroxydes organiques (b") sont utilisés à raison de 0,1 à 7 parties, de préférence 0,2 à 5 parties, pour 100 parties des gommes (a"). Ils sont bien connus des techniciens et comprennent plus spécialement le peroxyde de benzoyle, le peroxyde de dichloro-2,4 benzoyle, le peroxyde de dicumyle, le bis(t-butylperoxy)-2,5 diméthyl-2,5 hexane, le perbenzoate de t-butyle, le carbonate de péroxy t-butyle et d'isopropyle, le peroxyde de di-t-butyle, le bis(t-butylpéroxy)-1,1 triméthyl-3,3,5 cyclohexane.

Les compositions D de type EVC, peuvent comporter en outre de 1 à 10 parties en poids d'huile(s) polydiméthylsiloxane(s) (d") à extrémités silanols de viscosité à 25°C comprise entre 10 et 5000 mPa.s pour 100 parties de gomme (a").

La préparation des compositions polyorganosiloxanes D appelées RTV, LSR, EVC de polyaddition et EVC, contenant en plus l'additif d'amélioration des propriétés de résistance au cheminement d'arc et à l'érosion sous arc qui a été défini ci-avant dans le présent mémoire, s'effectue à l'aide de moyens mécaniques connus, par exemple des dispositifs équipés d'un agitateur à turbine, des pétrins, des mélangeurs à vis, des mélangeurs à cylindres. Les divers constituants sont incorporés dans ces appareils dans un ordre pouvant être quelconque ou qui tiendra compte de la forme monocomposante ou bicomposante souhaitée pour les compositions.

C'est ainsi que les compositions polyorganosiloxanes D contenant en plus l'additif peuvent être des compositions monocomposantes, c'est-à-dire livrées dans un seul emballage ; si la composition doit être stockée avant son utilisation, il peut être souhaitable d'ajouter, dans le cas des compositions RTV, LSR et EVC de polyaddition, une quantité efficace d'un inhibiteur (dont on a parlé ci-avant) de l'action catalytique du platine qui disparaît par chauffage lors de la réticulation de la composition. Ces compositions D contenant en plus l'additif peuvent être aussi des compositions bicomposantes, c'est-à-dire livrées dans deux emballages distincts, dont un seul d'entre eux comporte le catalyseur de réticulation ; pour l'obtention de l'élastomère, on mélange le contenu des deux emballages et la réticulation a lieu grâce au catalyseur. De pareilles compositions monocomposantes et bicomposantes sont bien connues de l'homme de métier.

La réticulation des compositions durcissables D contenant en plus l'additif pour l'obtention des élastomères peut être effectuée d'une manière connue en soi à la température ambiante (23°C) ou à des températures allant par exemple de 40°C à 250°C selon le type de la composition (RTV, LSR, EVC de polyaddition ou EVC) mise en oeuvre.

Les compositions D contenant en plus l'additif durcissent pour conduire à des élastomères ayant de bonnes propriétés de résistance au cheminement d'arc et à l'érosion sous arc, ainsi que de bonnes propriétés de résistance à la flamme et de bonnes propriétés mécaniques. Ces élastomères peuvent être utilisés dans toutes les applications dans lesquelles on peut mettre en oeuvre des élastomères de polyorganosiloxanes difficilement combustibles et/ou résistants aux courants de fuite et à l'arc électrique ; ils peuvent être utilisés par exemple pour réaliser des matériaux d'isolation électrique, des isolateurs moyenne tension et haute tension, des accessoires d'extrémité de câble, des jonctions de câble, des capuchons d'anode pour tubes de télévision, et des objets moulés ou des articles extrudés pour l'industrie aéronautique.

Les exemples suivants sont donnés à titre illustratif et ils ne peuvent pas être considérés comme une limite de la portée de l'invention.

<u>EXEMPLES 1 et 2:</u>

A) <u>Préparation des élastomères</u> :

Des élastomères de type RTV ont été obtenus à partir des compositions monocomposantes ci-après définies :

1) Composition témoin n° 1 :

Avec un agitateur de laboratoire à turbine, on mélange à température ambiante (23°C) :

- 93,3 parties en poids d'une suspension qui contient :
  - 67,3 parties en poids d'une huile polydiméthylsiloxane bloquée à chacune des extrémités des chaînes par un motif $(CH_3)_2ViSiO_{0,5}$ (Vi = groupe vinyle), ayant une viscosité de 600 mPa.s et contenant 0,014 fonction Si-Vi pour 100 g d'huile ;
  - 26 parties en poids de silice de pyrogénation, développant une surface spécifique BET de 300 $m^2/g$ traitée par de l'hexaméthyldisilazane de façon à ce que le poids de la silice de départ soit accru de 8 %) ;
- 4,7 parties en poids d'une huile polydiméthylsiloxane bloquée à chacune des extrémités des chaînes par un motif $(CH_3)_2HSiO_{0,5}$, ayant une viscosité de 8 mPa.s et contenant 0,19 fonction Si-H pour 100 g d'huile ;

- 2 parties en poids d'une huile poly(diméthyl)(hydrogénométhyl) siloxane bloquée à chacune des extrémités des chaînes par un motif $(CH_3)_2HSiO_{0,5}$, ayant une viscosité de 300 mPa.s et contenant au total 0,16 fonction Si-H pour 100 g d'huile ;
- 0,011 partie en poids d'une solution dans le divinyltétraméthyldisiloxane d'un complexe du platine à 12 % en poids de platine ligandé par du divinyltétraméthyldisiloxane (catalyseur de Karstedt), soit 0.0013 partie en poids de platine métal ; et
- 0,04 partie en poids du tétramère cyclique de méthylvinylpolysiloxane contenant 1,15 fonction Si-Vi pour 100 g du composé.

2) Composition de l'exemple 1 :

Elle est obtenue en ajoutant, au moyen d'un agitateur de type turbine, à 100 parties en poids de la composition témoin n° 1, 10 parties en poids d'une combinaison de FeO (21 % en poids dans la combinaison) avec $Fe_2O_3$ (79 % en poids dans la combinaison), ces oxydes ayant un diamètre moyen de 0,1 µm et une surface spécifique BET de 10 $m^2$ /g.

3) Composition témoin n° 2 :

Elle est obtenue en ajoutant, au moyen d'un agitateur de type turbine, à 100 parties en poids de la composition témoin n° 1, 30 parties en poids de silice naturelle (quartz) broyée, ayant un diamètre moyen de 3 µm et une surface spécifique BET de 2 $m^2$/g.

4) Composition de l'exemple 2 :

Elle est obtenue en ajoutant, au moyen d'un agitateur de type turbine, à 100 parties en poids de la composition témoin n° 1 :

- 25 parties en poids de la silice naturelle broyée engagée dans la composition témoin n° 2 ; et
- 5 parties en poids de la combinaison d'oxydes de fer engagée dans la composition de l'exemple 1.

Pour obtenir les élastomères, les compositions sont réticulées dans des moules adaptés (ayant une épaisseur de 6 mm pour les éprouvettes servant aux mesures de dureté, et une épaisseur de 2 mm pour les éprouvettes servant aux mesures de la résistance à la déchirure et à la mise en oeuvre des tests de résistances à la flamme et à l'érosion sous arc), pendant 60 minutes en opérant à 150°C dans un four ventilé commercialisé par la société HERAEUS.

B) <u>Evaluation des propriétés des élastomères :</u>

Les résultats obtenus sont rassemblés dans le tableau I suivant :

Tableau I

| Elastomère obtenu à partir de la : | DSA (1) | R/D (N/mm) (2) | Durée d'extinction (s) (3) | Perte de masse sous arc mg (4) |
|---|---|---|---|---|
| composition témoin n° 1 | 25 | 20 | combustion | 3,3 |
| composition de l'exemple 1 | 26 | 23 | 8 | 0,7 |

(1) DSA : dureté SHORE A ; les mesures sont réalisées selon les indications de la norme DIN 53505 ;
(2) R/D : résistance à la déchirure ; les mesures sont réalisées selon les indications de la norme ASTM D 624-A ;
(3) Les tests de résistance à la flamme des élastomères obtenus sont effectués suivant le protocole défini par "The Underwritors Laboratories" (UL 94V), quatrième édition du 18 juin 1991, qui consiste à exposer une éprouvette (dont la longueur est de 127 mm, la largeur de 12,7 mm et l'épaisseur de 2 mm) à une exposition de 10 secondes à une flamme de 980°C, et on mesure après cette exposition la durée d'extinction (chaque durée correspond à la moyenne de 9 essais de résistance à la flamme) ;
(4) Les tests de résistance à l'érosion sous arc sont effectués suivant le protocole défini ci-après :
Le principe de ce test consiste à appliquer localement à la surface du matériau comprenant l'élastomère silicone une contrainte du type "arc de bande sèche" et à mesurer l'érosion du matériau induit par la contrainte. Une des spécificités de ce test réside dans le fait que la puissance électrique appliquée est limitée et régulée autour d'une valeur moyenne de 9 $\pm$ 1 Watts.
Le schéma du montage est décrit dans la figure 1 annexée ; dans ce schéma, les références (1) à (9) désignent respectivement :
(1) le matériau comprenant l'élastomère silicone à tester,
(2) une pointe générant l'arc électrique,
(3) une cellule supportant le matériau (1) et contenant de l'eau,
(4) l'eau,
(5) une résistance shunt de mesure,
(6) une résistance de limitation,
(7) un générateur haute tension fonctionnant sous 50 Hz,
(8) un diviseur de tension, et
(9) un calculateur dont le rôle est de contrôler précisément les paramètres électriques qui permettent d'initier et d'entretenir un arc électrique sur la surface du matériau (1).

Tableau I (suite)

| Elastomère obtenu à partir de la : | DSA (1) | R/D (N/mm) (2) | Durée d'extinction (s) (3) | Perte de masse sous arc mg (4) |
|---|---|---|---|---|
| composition témoin n° 2 | 33 | 26 | 46 | 1,8 |
| composition de l'exemple 2 | 31 | 25 | 5 | 0,6 |

4.1- Réalisation du test:

4.1.1.- Positionnement mécanique de l'échantillon :

Les échantillons de dimensions 1,5 x 2 x 0,2 cm sont collés sur des plaques en résine époxy à 1 cm du bas de celles-ci.

La plaque est ensuite posée sur un support dans un récipient en verre de manière à faire un angle de 50,6° avec l'horizontale comme indiqué sur la figure 2 annexée où la référence (10) désigne un échantillon en élastomère silicone et la référence (11) désigne une plaque en résine époxy. L'ensemble formé par la plaque (11) sur laquelle est collé l'échantillon (10), constitue le matériau (1) comprenant l'élastomère silicone dont on a parlé ci-avant à propos de la figure 1.

Une électrode de masse est alors réalisée en enroulant du fil d'étain sur le bas de la plaque ; l'ensemble est alors mis en place dans la cellule et le niveau d'eau est réglé à une distance donnée du fond. On positionne alors la pointe à l'aide de verniers. La position de la pointe pour l'essai type est de 7 mmm au dessus de la surface de l'eau et de 1,3 mm de l'échantillon en horizontal comme indiqué sur la figure 3 annexée où la distance d1 = 7 mm et la distance d2 = 1,3 mm.

4.1.2.- Réglage des paramètres et lancement de l'essai :

La tension à vide du générateur est réglée à 7 kV.

Le système de lavage intermittent de l'échantillon est lancé. La surface de l'échantillon traitée par l'arc est rincé de manière intermittente afin d'enlever les cendres qui se forment sous l'impact de l'arc. Ce lavage consiste en un jet d'eau très fin qui est dirigé pendant 10 secondes toutes les 10 minutes. Le niveau de l'eau dans la cellule est maintenu constant par aspiration.

Une fois que tous les paramètres d'essai sont réglés, l'électrode de masse et la pointe sont reliés au montage. Le générateur peut alors être enclenché.

4.1.3.- Fin de l'essai :

Le circuit électrique est ouvert dès que l'énergie appliquée atteint 500 W.min.

4.2.- Mesure des volumes érodés :

Les échantillons sont détachés des plaques en résines époxy.

Les zones érodées sont débarrassées de toutes traces de cendres par rinçage à l'eau, les échantillons sont rincés à l'alcool puis séchés.

On prépare ensuite un mélange de résine époxy suffisamment fluide pour pouvoir être appliquée et combler les zones érodées (cf. figure 4 annexée). Après mélange la résine doit être dégazée sous une cloche à vide pendant au moins dix minutes. Une fois dégazée, la résine est employée pour combler les marques d'érosion (trous) sur la surface des échantillons, et leur redonner leurs volumes initiaux. Le contrôle visuel est alors très important. Un tranchant de lame de cutter sert à enlever le surplus de résine sur les échantillons. Après polymérisation complète (une nuit), les empreintes des érosions réalisées sont démoulées et pesées sur une balance de précision. Les masses trouvées (en mg) sont représentatives des volumes érodés. Dans la partie gauche de la figure 4 annexée, on reconnaît : le matériau (1) comprenant l'élastomère silicone, la pointe (2) générant l'arc électrique (12), le récipient (3) contenant l'eau (4) et le générateur de haute tension (7) ; dans la partie droite de la figure 4 annexée, on a représenté un échantillon en élastomère silicone (10) qui a été détaché de sa plaque support en résine époxy et qui comporte une marque d'érosion sous arc (ou trou) (13).

Le bénéfice apporté par les oxydes de fer est manifeste. On observe encore que les résultats des tests de résistance à la flamme et des tests de résistance à l'érosion sous arc sont bien correlés.

EXEMPLE 3:

A) Préparation des élastomères :

Des élastomères RTV ont été obtenus à partir des autres compositions monocomposantes ci-après définies :

1) Composition témoin n° 3 :

Avec un agitateur de laboratoire à turbine, on mélange à température ambiante (23°C) :

- 65 parties en poids de résine de structure $MM^{Vi}DD^{Vi}Q$ contenant 0,55 % en poids de groupes vinyles et constituée de 17,5 % en poids de motifs $(CH_3)_3SiO_{0,5}$, 0,3 % en poids de motifs $(CH_3)_2ViSiO_{0,5}$ 74,5 % en poids de motifs $(CH_3)_2SiO$, 1,5 % en poids de motifs $(CH_3)ViSiO$ et 6,2 % en poids de motifs $SiO_2$;
- 33 parties en poids de silice naturelle (quartz) broyée, ayant un diamètre moyen de 3 µm et une surface spécifique BET de 2 $m^2/g$ ;
- 2 ,9 parties en poids d'une huile poly(diméthyl)(hydrogénométhyle) siloxane bloquée à chacune des extrémités des chaînes par un motif $(CH_3)_2HSiO_{0,5}$, ayant une viscosité de 25 mPa.s et contenant au total 0,7 fonction Si-H pour 100 g d'huile ;
- 0,0063 partie en poids d'une solution dans le divinyltétraméthyldisiloxane d'un complexe du platine à 12 % en poids de platine ligandé par du divinyltétraméthyldisiloxane (catalyseur de Karstedt), soit 0,00075 partie en poids de platine métal ; et
- 0,03 partie en poids d'inhibiteur consistant dans l'éthynyl-1 cycfohexanol-1.

2) Composition de l'exemple 3 :

Elle est obtenue en ajoutant, au moyen d'un agitateur de type turbine, à 100 parties en poids de la composition témoin n° 3, 5 parties en poids de la combinaison d'oxydes de fer engagée dans la composition de l'exemple 1.

Pour obtenir les élastomères, les compositions sont réticulées pendant 60 minutes en opérant à 150°C dans un four ventilé commercialisé par la Société HERAEUS.

B) Evaluation des propriétés des élastomères :

Les résultats obtenus sont rassemblés dans le tableau II suivant :

Tableau II

| Elastomère obtenu à partir de la : | DSA (1) | R/D (N/mm) (2) | Durée d'extinction (s) (3) | Perte de masse sous arc (mg) (4) |
|---|---|---|---|---|
| composition témoin n° 3 | 60 | 12 | 8 | 3,9 |
| composition de l'exemple 3 | 50 | 10 | 2 | 2,1 |
| Rubriques (1) à (4) : cf. tableau I | | | | |

EXEMPLES 4 à 6:

A) Préparation des élastomères:

Des élastomères de type RTV ont été obtenus à partir des autres compositions monocomposantes ci-après définies :

1) Composition témoin n° 4 :

Avec un agitateur de laboratoire à turbine, on mélange à température ambiante (23°C) :

- 93,4 parties en poids d'une suspension qui contient :
  - 70,4 parties en poids de l'huile polydiméthylsiloxane bloquée à chacune des extrémités des chaînes par un motif $(CH_3)_2ViSiO_{0,5}$ engagée dans la composition témoin n° 1 ;
  - 23 parties en poids de la silice de pyrogénation traitée par de l'hexaméthyldisilazane engagée dans la composition témoin n° 1 ;
- 1,7 partie en poids de silice naturelle (quartz) broyée, ayant un diamètre moyen de 2 µm et une surface spécifique BET de 3 $m^2/g$ ;
- 3,0 parties en poids de l'huile polydiméthylsiloxane bloquée à chacune des extrémités des chaînes par un motif $(CH_3)_2HSiO_{0,5}$ engagée dans la composition témoin n° 1 ;

- 1,9 parties en poids d'une huile poly(diméthyl)(hydrogénométhyl) siloxane bloquée à chacune des extrémités des chaînes par un motif $(CH_3)_3SiO_{0,5}$, ayant une viscosité de 10 mPa.s et contenant au total 0,36 fonction Si-H pour 100 g d'huile;
- 0,025 partie en poids d'une solution dans le divinyltétraméthyldisitoxane d'un complexe du platine à 12 % en poids de platine ligandé par du divinyltétraméthyldisiloxane (catalyseur de Karstedt), soit 0,003 partie en poids de platine métal ; et
- 0.08 partie en poids du tétramère cyclique de méthylvinylpolysiloxane et contenant 1,15 fonction Si-Vi pour 100 g du composé.

2) Composition de l'exemple 4 :

Elle est obtenue en ajoutant, au moyen d'un agitateur de type turbine, à 100 parties en poids de la composition témoin n° 4, 3 parties en poids d'hydroxyde de cérium-IV anhydre, cet hydroxyde ayant un diamètre moyen de 2 µm et une surface spécifique BET de 1 $m^2$/g.

3) Composition de l'exemple 5 :

Elle est obtenue en ajoutant, au moyen d'un agitateur de type turbine, à 100 parties en poids de la composition témoin n° 4 :

- 3 parties en poids de l'hydroxyde de cérium-IV engagé dans la composition de l'exemple 4 ; et
- 3 parties en poids d'oxyde de titane $TiO_2$, ayant un diamètre moyen de 0,03 µm et une surface spécifique BET de 50 $m^2$ / g.

4) Composition de l'exemple 6 : .

Elle est obtenue en ajoutant, au moyen d'un agitateur de type turbine, à 100 parties en poids de la composition témoin n° 4 :

- 3 parties en poids de l'hydroxyde de cérium-IV engagé dans la composition de l'exemple 4 ;
- 1 parties en poids du $TiO_2$ engagé dans la composition de l'exemple 5 ; et
- 0,25 partie en poids de la combinaison d'oxydes de fer engagée dans la composition de l'exemple 1.

Pour obtenir les élastomères, les compositions sont réticulées pendant 60 minutes en opérant à 150°C dans un four ventilé commercialisé par la Société HERAEUS.

B) Evaluation des propriétés des élastomères :

Les résultats obtenus sont rassemblés dans le tableau III suivant:

Tableau III

| Elastomère obtenu à partir de la : | DSA (1) | R/D (N/mm) (2) | Classement UL 94 (3) |
|---|---|---|---|
| composition témoin n° 4 | 32 | 18 | V1 - 6/9 |
| composition de l'exemple 4 | 31 | 16 | V1 - 9/9 |
| composition de l'exemple 5 | 35 | 18 | V1 - 9/9 |
| composition de l'exemple 6 | 32 | 19 | V0 - 9/9 |
| Rubriques (1), (2) et (3) : cf. tableau I. | | | |

A noter que dans le cadre du test UL 94, le classement est complété en indiquant le nombre des éprouvettes (sur un total de 9) qui répondent au classement obtenu.

## Revendications

**1.** Utilisation comme additif d'amélioration des propriétés de résistance au cheminement d'arc et à l'érosion sous arc :

- d'un mélange A, B ou C formé de :

① s'agissant du mélange A, des constituants A1 + A3 où : le constituant A1 est du platine sous forme de complexe ou de composé du platine ; et le constituant A3 consiste dans une combinaison de FeO avec $Fe_2O_3$;
② s'agissant du mélange B, des constituants B1 + 82 où : le constituant B1 a la signification du constituant A1 de ① ; et le constituant B2 consiste dans l'oxyde et/ou l'hydroxyde de cérium-IV;
③ s'agissant du mélange B, des constituants B1 + B3 où : le constituant B1 a la signification du constituant A1 de ① ; et le constituant B3 consiste dans une combinaison de l'oxyde et/ou l'hydroxyde de cérium-IV avec l'oxyde de titane $TiO_2$ :
ou
④ s'agissant du mélange C, des constituants C1 + C2 où : le constituant C1 a la signification du constituant A1 de ① ; et le constituant C2 consiste dans une combinaison du constituant B3 cité sous ③ avec le constituant A3 cité sous ① ;

les quantités des divers constituants A1, A3, B1, B2, 83, C1 et C2 et les rapports pouvant exister entre les quantités de certains d'entre eux dans le cas des combinaisons se situent dans les intervalles mentionnés ci-après ;

. la quantité de platine, exprimé en partie en poids de platine élémentaire, se situe dans l'intervalle allant de 1 à 250 ppm par rapport au poids total du (ou des) constituant(s) polyorganosiloxane(s) des compositions durcissables D ; et
. les quantités des constituants A3, B2, B3 et C2 des mélanges A, B et C, exprimées en partie en poids du constituant, se situent dans l'intervalle allant de 0,5 à 30 parties en poids pour 100 parties du (ou des) constituant(s) polyorganosiloxane(s) des compositions durcissables D ;
. dans le constituant A3 (combinaison), le rapport entre la quantité pondérale de FeO et celle du $Fe_2O_3$ se situe dans l'intervalle allant de 0,1 / 1 à 9 /1 ;
. dans le constituant B3 (combinaison), le rapport entre la quantité pondérale de l'oxyde et/ou l'hydroxyde de cérium-IV et celle de $TiO_2$ se situe dans l'intervalle allant de 0,6 11 à 6 11 ;
. dans le constituant C2 (combinaison), le rapport entre la quantité pondérale du constituant A3 et celle du constituant 83 se situe dans l'intervalle allant de 0,02 / 1 à 1/1;

• dans une composition polyorganosiloxane D pour l'obtention d'un élastomère silicone, soit réticulant à température ambiante ou à la chaleur par des réactions de polyaddition en présence d'un catalyseur au platine, soit réticulant à température élevée sous l'action de péroxyde(s) organique(s).

**2.** Utilisation selon la revendication 1, **caractérisée en ce que** les compositions polyorganosiloxanes durcissables D, présentées en un seul ou en plusieurs emballage(s) (mono- ou multicomposants), renferment un constituant principal formé d'un ou plusieurs constituants) polyorganosiloxane(s), un catalyseur approprié et éventuellement un ou plusieurs composé(s) pris dans le groupe formé par notamment: les charges renforçantes ou semi-renforçantes ou de bourrage ou servant à adapter la rhéologie des compositions durcissables, les agents de réticulation, les agents d'adhérence, les agents plastifiants, les agents inhibiteurs du catalyseur et les agents de coloration.

**3.** Utilisation selon la revendication 2, **caractérisée en ce que** les polyorganosiloxanes, constituants principaux des compositions D, sont constitués de motifs siloxyles de formule générale :

$$R_nSiO_{\frac{4-n}{2}} \quad (I)$$

et/ou de motifs siloxyles de formule :

$$Z_xR_ySiO_{\frac{4-x-y}{2}} \quad (II)$$

formules dans lesquelles les divers symboles ont la signification suivante :

- les symboles R, identiques ou différents, représentent chacun un groupement de nature hydrocarbonée non hydrolysable, ce radical pouvant être:

* un radical alkyle, halogénoalkyle ayant de 1 à 5 atomes de carbone et comportant de 1 à 6 atomes de chlore et/ou de fluor,
* des radicaux cycloalkyles et halogénocycloalkyles ayant de 3 à 8 atomes de carbone et contenant de 1 à 4 atomes de chlore et/ou de fluor,
* des radicaux aryles, alkylaryles et halogénoaryles ayant de 6 à 8 atomes de carbone et contenant de 1 à 4 atomes de chlore et/ou de fluor,
* des radicaux cyanoalkyles ayant de 3 à 4 atomes de carbone ;

- les symboles Z, représentent chacun un atome d'hydrogène ou un groupe alkényle en $C_2$-$C_6$ ;
- n = un nombre entier égal à 0, 1, 2 ou 3 ;
- x = un nombre entier égal à 0, 1, 2 ou 3 ;
- y = un nombre entier égal à 0, 1, ou 2 ;
- la somme x + y se situe dans l'intervalle allant de 1 à 3.

**4.** Utilisation selon la revendication 2 ou 3, **caractérisée en ce que** les compositions polyorganosiloxanes D sont celles, monocomposantes ou bicomposantes, réticulant à température ambiante ou à la chaleur par des réactions de polyaddition, appelées RTV, qui comprennent :

(a) 100 parties en poids d'au moins un polydiorganosiloxane choisi parmi les homopolymères et les copolymères linéaires présentant par molécule au moins 2 groupes vinyles liés à des atomes de silicium différents, situées dans la chaîne et/ou en bouts de chaîne, dont les autres radicaux organiques liés aux atomes de silicium sont choisis parmi les radicaux méthyle, éthyle et phényle, au moins 60 % molaire de ces autres radicaux étant des radicaux méthyle, et présentant une viscosité allant de 400 à 100 000 mPa.s à 25°C ;
(b) au moins un polyorganohydrogénosiloxane choisi parmi les homopolymères et les copolymères linéaires ou cycliques présentant par molécule au moins 2 atomes d'hydrogène liés à des atomes de silicium différents et dont les radicaux organiques liés aux atomes de silicium sont choisis parmi les radicaux méthyle, éthyle et phényle, au moins 60 % molaire de ces radicaux étant des radicaux méthyle, et présentant une viscosité allant de 5 à 1 000 mPa.s à 25°C, le réactif (b) étant utilisé en quantité telle que le rapport molaire des fonctions hydrure de (b) sur les groupes vinyle de (a) est compris entre 1,1 et 4 ;
(c) une quantité catalytiquement efficace d'un catalyseur au platine ;
(d) 0 à 120 partie(s) en poids de charge(s) siliceuse(s) pour 100 parties en poids de l'ensemble des polyorganosiloxanes (a) + (b).

**5.** Utilisation selon la revendication 4, **caractérisée en ce que** jusqu'à 100 % en poids du réactif (a) est remplacé par une résine polyorganosiloxane comportant dans sa structure de 0,1 à 20 % en poids de groupe(s) vinyle(s), ladite structure présentant au moins deux motifs différents choisis parmi les motifs M (triorganosiloxyle), D (diorganosiloxyle), T (monoorganosiloxyle) et Q ($SiO_{4/2}$), l'un au moins de ces motifs étant un motif T ou Q, le (ou les) groupe(s) vinyle (s) pouvant être portées) par les motifs M, D et/ou T.

**6.** Utilisation selon les revendications 2 à 5, **caractérisée en ce que** les compositions polyorganosiloxanes D sont celles, monocomposantes ou bicomposantes, réticulant à la chaleur par des réactions de polyaddition, appelées LSR, ces compositions répondant aux définitions données ci-avant dans la revendication 4 ou 5 à propos des compositions appelées RTV, sauf en ce qui concerne la viscosité du réactif polydiorganosiloxane vinylé (a) qui se situe cette fois dans l'intervalle allant d'une valeur supérieure à 100 000 mPa.s à 500 000 mPa.s.

**7.** Utilisation selon la revendication 2 ou 3, **caractérisée en ce que** les compositions polyorganosiloxanes D sont celles, monocomposantes ou bicomposantes, réticulant à la chaleur par des réactions de polyaddition, appelées compositions EVC de polyaddition, qui comprennent :

(a') 100 parties en poids d'une gomme polydiorganosiloxane qui est un homopolymère ou copolymère linéaire présentant par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux étant des radicaux méthyle, et ladite gomme présentant une viscosité supérieure à 500.000 mPa.s à 25°C ;
(b') au moins un polyorganohydrogénosifoxane choisi parmi les homopolymères et les copolymères linéaires, cycliques ou en réseau présentant par molécule au moins 3 atomes d'hydrogène liés à des atomes de silicium différents et dont les radicaux organiques liés aux atomes de silicium sont choisis parmi les radicaux méthyle, éthyle, phényle, au moins 60 % molaire de ces radicaux étant des radicaux méthyle, et présentant une viscosité

allant de 5 à 1 000 mPa.s à 25°C, le réactif (b') étant utilisé en quantité telle que le rapport molaire des fonctions hydrure de (b') sur les groupes vinyle de (a') est compris entre 0,4 et 10 ;
(c') une quantité catalytiquement efficace d'un catalyseur au platine ;
(d') 0,5 à 120 partie(s) en poids de charge(s) siliceuse(s) pour 100 parties en poids de l'ensemble des polyorganosiloxanes (a') + (b').

**8.** Utilisation selon la revendication 2 ou 3, **caractérisée en ce que** les compositions polyorganosiloxanes D sont celles, monocomposantes, appelées EVC, comprenant :

(a") 100 parties en poids d'une gomme polydiorganosiloxane qui est un homopolymère ou un copolymère linéaire présentant par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux étant des radicaux méthyle, et ladite gomme présentant une viscosité d'au moins 1 million de mPa.s à 25°C ;
(b") 0,1 à 7 parties en poids d'un péroxyde organique ;
(c") 0,5 à 120 parties en poids de charge(s) siliceuse(s) pour 100 parties en poids de gomme (a").

**9.** Articles en élastomère silicone ayant de bonnes propriétés de résistance au cheminement d'arc et à l'érosion sous arc, ainsi que de bonnes propriétés de résistance à la flamme et de bonnes propriétés mécaniques, **caractérisés en ce qu'**ils sont obtenus par réticulation :

- des compositions polyorganosiloxanes D telles que définies dans l'une quelconque des revendications 2 à 8,
- contenant un additif d'amélioration formé d'un mélange constitué essentiellement:
    - de platine sous forme de complexe ou de composé du platine et d'hydroxyde de cérium IV; ou
    - de platine sous forme de complexe ou de composé du platine et une combinaison d'hydroxyde de cérium IV avec l'oxyde de titane $TiO_2$.

**10.** Articles selon la revendication 9, **caractérisés en ce qu'**ils consistent dans des matériaux d'isolation électrique, des isolateurs moyenne tension et haute tension, des accessoires d'extrémité de câble, des jonctions de câble, des capuchons d'anode pour tubes de télévision, et des objets moulés ou des articles extrudés pour l'industrie aéronautique.

**Patentansprüche**

**1.** Verwendung als Zusatzstoff zur Verbesserung der Widerstandsfähigkeit gegenüber Kriechströmen und Lichtbogenerosion:

- von einer Mischung A, B oder C, gebildet von:

    ① wenn es sich um die Mischung A handelt, den Bestandteilen A1 + A3, worin der Bestandteil A Platin ist in Form von Komplex oder Platinverbindung; und der Bestandteil A3 aus einer Kombination von FeO mit $Fe_2O_3$ besteht;
    ② wenn es sich um die Mischung B handelt, den Bestandteilen B1 + B2, worin der Bestandteil B1 die Bedeutung des Bestandteils A1 von ① besitzt; und der Bestandteil B2 aus Oxid und/oder Hydroxid von Cerium(IV) besteht;
    ③ wenn es sich um die Mischung B handelt, den Bestandteilen B1 + B3, worin der Bestandteil B1 die Bedeutung des Bestandteils A1 von ① besitzt; und der Bestandteil B3 aus einer Kombination von Oxid und/oder Hydroxid von Cerium(IV) mit Titanoxid $TiO_2$ besteht; oder
    ④ wenn es sich um die Mischung C handelt, den Bestandteilen C1 + C2, worin der Bestandteil C1 die Bedeutung des Bestandteils A1 von ① besitzt; und der Bestandteil C2 aus einer Kombination des unter ③ genannten Bestandteils B3 mit dem unter ① genannten Bestandteil A3 besteht;

wobei die Mengen der verschiedenen Bestandteile A1, A3, B1, B2, B3, C1 und C2 und die Verhältnisse, die zwischen den Mengen von einigen von ihnen im Fall der Kombinationen existieren können, sich in den nachstehend erwähnten Intervallen befinden:

. die Menge von Platin, ausgedrückt in Gewichtsteilen von elementarem Platin, befindet sich im Intervall von 1 bis 250 ppm, bezogen auf das Gesamtgewicht des oder der Polyorganosiloxan-Bestandteils(e) der härtbaren Zusammensetzungen D; und
. die Mengen der Bestandteile A3, B2, B3 und C2 der Mischungen A, B und C, ausgedrückt in Gewichtsteilen des Bestandteils, befinden sich im Intervall von 0,5 bis 30 Gewichtsteilen pro 100 Gewichtsteile des oder der Polyorganosiloxan-Bestandteils(e) der härtbaren Zusammensetzungen D;
. in dem Bestandteil A3 (Kombination) befindet sich das Verhältnis zwischen der Gewichtsmenge von FeO und der von $Fe_2O_3$ im Intervall von 0,1/1 bis 9/1;
. in dem Bestandteil B3 (Kombination) befindet sich das Verhältnis zwischen der Gewichtsmenge des Oxids und/oder des Hydroxids von Cerium (IV) und der von $TiO_2$ im Intervall von 0,6/1 bis 6/1;
. in dem Bestandteil C2 (Kombination) befindet sich das Verhältnis zwischen der Gewichtsmenge des Bestandteils A3 und der des Bestandteils B3 im Intervall von 0,02/1 bis 1/1;

• in einer Polyorganosiloxan-Zusammensetzung D zur Herstellung eines Siliconelastomers, die entweder bei Umgebungstemperatur oder bei Erwärmung durch Reaktionen der Polyaddition in Anwesenheit eines Platinkatalysators oder bei erhöhter Temperatur unter der Einwirkung von organischem(n) Peroxid(en) vernetzt.

**2.** Verwendung nach Anspruch 1, **dadurch gekennzeichnet, daß** die härtbaren Polyorganosiloxan-Zusammensetzungen D, die in einer einzigen oder in mehreren Emballage(n) (Mono- oder Multikomponenten) vorliegen, einen Hauptbestandteil umfassen, gebildet aus einem oder mehreren Polyorganosiloxan-Bestandteilen, einem geeigneten Katalysator und gegebenenfalls einer oder mehreren Verbindung(en), gewählt aus der Gruppe, die gebildet wird durch: die verstärkenden oder halbverstärkenden Füllstoffe oder Füllungen oder solche, die zur Anpassung der Rheologie der härtbaren Zusammensetzungen dienen, die Vernetzungsmittel, die Haftmittel, die Weichmacher, die Inhibitormittel für den Katalysator und die Farbstoffe.

**3.** Verwendung nach Anspruch 2, **dadurch gekennzeichnet, daß** die Polyorganosiloxane, die den Hauptbestandteil der Zusammensetzungen D bilden, aus Struktureinheiten Siloxyl der allgemeinen Formel (I)

$$R_nSiO_{\frac{4-n}{2}} \qquad (I)$$

und/oder aus Struktureinheiten Siloxyl der allgemeinen Formel (II)

$$Z_xR_ySiO_{\frac{4-x-y}{2}} \qquad (II)$$

bestehen, in denen die verschiedenen Symbole die folgende Bedeutung besitzen:

- die Symbole R, gleich oder verschieden, stellen jeweils eine nicht hydrolysierbare Gruppe von Kohlenwasserstoff-Beschaffenheit dar, wobei dieser Rest sein kann:

  * ein Rest Alkyl, Halogenalkyl mit 1 bis 5 Kohlenstoffatomen und 1 bis 6 Atomen von Chlor und/oder Fluor,
  * Reste Cycloalkyl und Halogencycloalkyl mit 3 bis 8 Kohlenstoffatomen und 1 bis 4 Atomen von Chlor und/oder Fluor,
  * Reste Aryl, Alkylaryl und Halogenaryl mit 6 bis 8 Kohlenstoffatomen und 1 bis 4 Atomen von Chlor und/oder Fluor,
  * Reste Cyanoalkyl mit 3 bis 4 Kohlenstoffatomen;

- die Symbole Z stellen jeweils ein Wasserstoffatom oder eine Gruppe Alkenyl mit 2 bis 6 Kohlenstoffatomen dar;
- n ist eine ganze Zahl von 0, 1, 2 oder 3;
- x ist eine ganze Zahl von 0, 1, 2 oder 3;
- y ist eine ganze Zahl von 0, 1 oder 2;
- die Summe x + y befindet sich im Intervall von 1 bis 3.

**4.** Verwendung nach Anspruch 2 oder 3, **dadurch gekennzeichnet, daß** die Polyorganosiloxan-Zusammensetzungen D solche Einkomponentenoder Zweikomponenten-Zusammensetzungen sind, die bei Umgebungstemperatur oder bei Erwärmung durch Reaktionen der Polyaddition, genannt RTV, vernetzen und die umfassen:

(a) 100 Gewichtsteile von mindestens einem Polydiorganosiloxan, ausgewählt unter den linearen Homopolymeren und den Copolymeren, die pro Molekül mindestens zwei Vinylgruppen aufweisen, gebunden an verschiedene Siliciumatome und positioniert in der Kette und/oder am Ende der Kette, deren andere organische Reste, die an Siliciumatome gebunden sind, ausgewählt werden unter den Resten Methyl, Ethyl und Phenyl, wobei mindestens 60 Mol-% dieser anderen Reste Methylreste sind, und das Polydiorganosiloxan eine Viskosität von 400 bis 100.000 mPa.s bei 25 °C aufweist;
(b) mindestens ein Polyorganohydrogensiloxan, ausgewählt unter den linearen oder cyclischen Homopolymeren und Copolymeren, die pro Molekül mindestens zwei Wasserstoffatome aufweisen, gebunden an verschiedene Siliciumatome und deren organische Reste, die an Siliciumatome gebunden sind, ausgewählt werden unter den Resten Methyl, Ethyl und Phenyl, wobei mindestens 60 Mol-% dieser Reste Methylreste sind, und das Polyorganohydrogensiloxan eine Viskosität von 5 bis 1.000 mPa.s bei 25 °C aufweist, wobei der Reaktand (b) in einer solchen Menge verwendet wird, daß das molare Verhältnis der Hydridfunktionen von (b) zu den Vinylgruppen von (a) zwischen 1,1 und 4 beträgt,
(c) eine katalytisch wirksame Menge eines Platinkatalysators;
(d) 0 bis 120 Gewichtsteile von siliziumhaltigem(n) Füllstoff(en) pro 100 Gewichtsteile der Gesamtheit der Polyorganosiloxane (a) + (b) .

**5.** Verwendung nach Anspruch 4, **dadurch gekennzeichnet, daß** bis zu 100 Gew.-% des Reaktanden (a) durch ein Polyorganosiloxan-Harz ersetzt werden, das in seiner Struktur 0,1 bis 20 Gew.-% Vinylgruppe(n) umfaßt, wobei die genannte Struktur mindestens zwei unterschiedliche Struktureinheiten aufweist, ausgewählt unter den Struktureinheiten M (Triorganosiloxyl), D (Diorganosiloxyl), T (Monoorganosiloxyl) und Q ($SiO_{4/2}$) , und mindestens eine dieser Struktureinheiten eine Struktureinheit T oder Q ist, und wobei die Vinylgruppe(n) durch die Struktureinheiten M, D und/oder T getragen werden kann (können).

**6.** Verwendung nach Anspruch 2 bis 5, **dadurch gekennzeichnet, daß** die Polyorganosiloxan-Zusammensetzungen D solche Einkomponentenoder Zweikomponenten-Zusammensetzungen sind, die bei Erwärmung durch Reaktionen der Polyaddition, genannt LSR, vernetzen, wobei diese Zusammensetzungen den vorstehend in den Ansprüchen 4 oder 5 bei den Zusammensetzungen, genannt RTV, angegebenen Definitionen entsprechen, mit Ausnahme der Viskosität des Reaktanden vinyliertes Polydiorganosiloxan (a), die sich diesmal im Intervall eines Wertes über 100.000 mPa.s bis 500.000 mPa.s befindet.

**7.** Verwendung nach Anspruch 2 oder 3, **dadurch gekennzeichnet, daß** die Polyorganosiloxan-Zusammensetzungen D solche Einkomponentenoder Zweikomponenten-Zusammensetzungen sind, die bei Erwärmung durch Reaktionen der Polyaddition, genannt Zusammensetzungen EVC der Polyaddition, vernetzen, und die umfassen:

(a') 100 Gewichtsteile eines Polydiorganosiloxan-Gummis, der ein lineares Homopolymer oder Copolymer ist, das pro Molekül mindestens zwei Vinylgruppen aufweist, gebunden an verschiedene Siliciumatome und positioniert in der Kette und/oder am Ende der Kette, deren andere organische Reste, die an Siliciumatome gebunden sind, ausgewählt werden unter den Resten Methyl, Ethyl und Phenyl, wobei mindestens 60 Mol-% dieser anderen Reste Methylreste sind, und der genannte Gummi eine Viskosität von über 500.000 mPa.s bei 25 °C aufweist;
(b') mindestens ein Polyorganohydrogensiloxan, ausgewählt unter den linearen, cyclischen oder netzartigen Homopolymeren und Copolymeren, die pro Molekül mindestens drei Wasserstoffatome aufweisen, gebunden an verschiedene Siliciumatome und deren organische Reste, die an Siliciumatome gebunden sind, ausgewählt werden unter den Resten Methyl, Ethyl und Phenyl, wobei mindestens 60 Mol-% dieser Reste Methylreste sind, und das Polyorganohydrogensiloxan eine Viskosität von 5 bis 1.000 mPa.s bei 25 °C aufweist, wobei der Reaktand (b') in einer solchen Menge verwendet wird, daß das molare Verhältnis der Hydridfunktionen von (b') zu den Vinylgruppen von (a') zwischen 0,4 und 10 beträgt,
(c') eine katalytisch wirksame Menge eines Platinkatalysators;
(d') 0,5 bis 120 Gewichtsteile von siliziumhaltigem(n) Füllstoff(en) pro 100 Gewichtsteile der Gesamtheit der Polyorganosiloxane (a') + (b').

**8.** Verwendung nach Anspruch 2 oder 3, **dadurch gekennzeichnet, daß** die Polyorganosiloxan-Zusammensetzungen D solche Einkomponenten-Zusammensetzungen, genannt EVC, sind, die umfassen:

(a'') 100 Gewichtsteile eines Polydiorganosiloxan-Gummis, der ein lineares Homopolymer oder Copolymer ist, das pro Molekül mindestens zwei Vinylgruppen aufweist, gebunden an verschiedene Siliciumatome und positioniert in der Kette und/oder am Ende der Kette, deren andere organische Reste, die an Siliciumatome

gebunden sind, ausgewählt werden unter den Resten Methyl, Ethyl und Phenyl, wobei mindestens 60 Mol-% dieser anderen Reste Methylreste sind, und der genannte Gummi eine Viskosität von mindestens 1 Million mPa.s bei 25 °C aufweist;
(b") 0,1 bis 7 Gewichtsteile eines organischen Peroxides;
(c") 0,5 bis 120 Gewichtsteile von siliziumhaltigem(n) Füllstoff(en) pro 100 Gewichtsteile des Gummis (a").

**9.** Artikel aus Siliconelastomer mit guten Eigenschaften im Hinblick auf die Widerstandsfähigkeit gegenüber Kriechströmen und Lichtbogenerosion sowie guten Eigenschaften der Flammfestigkeit und guten mechanischen Eigenschaften, **dadurch gekennzeichnet, daß** sie erhalten werden durch Vernetzung:

- der Polyorganosiloxan-Zusammensetzungen D wie in irgendeinem der Ansprüche 2 bis 8 definiert,
- die einen Zusatzstoff zur Verbesserung enthalten, gebildet aus einer Mischung, die im wesentlichen besteht aus:

  - Platin in Form von Komplex oder Platinverbindung und Cerium(IV)-hydroxid; oder
  - Platin in Form von Komplex oder Platinverbindung und einer Kombination von Cerium(IV)-hydroxid mit Titanoxid ($TiO_2$).

**10.** Artikel nach Anspruch 9, **dadurch gekennzeichnet, daß** sie aus Materialien für die elektrische Isolierung, Isolatoren für mittlere und hohe Spannung, Zubehör für Kabelenden, Kabelverbindungen, Anodenkappen für Fernsehröhren und Formgußgegenständen oder extrudierten Artikeln für die Flugzeugindustrie bestehen.

## Claims

**1.** Use, as an additive for enhancing the arc-tracking and arc-erosion resistance properties:

**o** of a mixture A, B or C formed from:

① in regard to mixture A, constituents A1 + A3 where constituent A1 is platinum in the form of a platinum complex or compound and constituent A3 consists of a combination of FeO and $Fe_2O_3$;
② in regard to mixture B, constituents B1 + B2 where constituent B1 has the meaning of constituent A1 of ① and constituent B2 consists of cerium (IV) oxide and/or hydroxide;
③ in regard to mixture B, constituents B1 + B3 where constituent B1 has the. meaning of constituent A1 of ① and constituent B3 consists of a combination of cerium(IV) oxide and/or hydroxide and titanium oxide $TiO_2$; or
④ in regard to mixture C, constituents C1 + C2 where constituent C1 has the meaning of constituent A1 of ① and constituent C2 consists of a combination of constituent B3 mentioned in ③ and constituent A3 mentioned in ① ;

the amounts of the various constituents A1, A3, B1, B2, B3, C1 and C2, and the ratios that may exist between the amounts of some of them in the case of combinations, lie within the ranges mentioned below;

**o** the amount of platinum, expressed in parts by weight of elemental platinum, lies within the range going from 1 to 250 ppm with respect to the total weight of the polyorganosiloxane constituent(s) of the curable compositions D; and

**o** the amounts of constituents A3, B2, B3 and C2 of mixtures A, B and C, expressed in parts by weight of the constituent, lie within the range going from 0.5 to 30 parts by weight per 100 parts of the polyorganosiloxane constituent(s) of the curable compositions D;

**o** in constituent A3 (a combination), the ratio of the amount by weight of FeO to that of $Fe_2O_3$ lies within the range going from 0.1:1 to 9:1;

**o** in constituent B3 (a combination), the ratio of the amount by weight of cerium (IV) oxide and/or hydroxide to that of $TiO_2$ lies within the range going from 0.6:1 to 6:1;

**o** in constituent C2 (a combination), the ratio of the amount by weight of constituent A3 to that of constituent B3 lies within the range going from 0.02:1 to 1:1;

**o** in a polyorganosiloxane composition D for obtaining a silicone elastomer, either crosslinking at room temperature or with the heat from polyaddition reactions in the presence of a platinum catalyst, or crosslinking at high temperature by the action of an organic peroxide or peroxides.

2. Use according to Claim 1, **characterized in that** the curable polyorganosiloxane compositions D, presented as one or more (one-component or multicomponent) packages, contain a main constituent formed from one or more polyorganosiloxane constituents, a suitable catalyst and, optionally, one or more compounds selected from the group formed in particular by reinforcing or semi-reinforcing or bulking fillers or fillers serving to modify the rheology of the curable compositions, crosslinking agents, adhesion promoters, plasticizers, catalyst inhibitors and colorants.

3. Use according to Claim 2, **characterized in that** the polyorganosiloxanes - the main constituents of compositions D - consist of siloxyl units of general formula:

$$R_nSiO_{\frac{4-n}{2}} \qquad (I)$$

and/or siloxyl units of formula:

$$Z_xR_ySiO_{\frac{4-x-y}{2}} \qquad (II)$$

in which formulae the various symbols have the following meaning:

- the symbols R, which are identical or different, each represent a non-hydrolysable hydrocarbon-type group, it being possible for this radical to be:
  - an alkyl, or a haloalkyl radical having from 1 to 5 carbon atoms and containing from 1 to 6 chlorine and/or fluorine atoms;
  - cycloalkyl and halocycloalkyl radicals having from 3 to 8 carbon atoms and containing from 1 to 4 chlorine and/or fluorine atoms;
  - aryl, alkylaryl and haloaryl radicals having from 6 to 8 carbon atoms and containing from 1 to 4 chlorine and/or fluorine atoms;
  - cyanoalkyl radicals having from 3 to 4 carbon atoms;
- the symbols Z each represent a hydrogen atom or a $C_2$-$C_6$ alkenyl group;
- n = an integer equal to 0, 1, 2 or 3;
- x = an integer equal to 0, 1, 2 or 3;
- y = an integer equal to 0, 1 or 2;
- the sum x + y lies within the range going from 1 to 3.

4. Use according to Claim 2 or 3, **characterized in that** the polyorganosiloxane compositions D are those one-component or two-component compositions crosslinking at room temperature or with the heat from polyaddition reactions, called RTV compositions, which comprise:

   (a) 100 parts by weight of at least one polydiorganosiloxane chosen from linear homopolymers and copolymers having at least 2 vinyl groups per molecule, these vinyl groups being linked to different silicon atoms and located in the chain and/or at the chain ends, the other organic radicals of which, linked to the silicon atoms, are chosen from methyl, ethyl and phenyl radicals, at least 60 mol% of these other radicals being methyl radicals, and having a viscosity ranging from 400 to 100,000 mPa.s at 25°C;
   (b) at least one polyorganohydrosiloxane chosen from linear or cyclic homopolymers and copolymers having at least 2 hydrogen atoms per molecule, these hydrogen atoms being linked to different silicon atoms and the organic radicals of which, linked to the silicon atoms, are chosen from methyl, ethyl and phenyl radicals, at least 60 mol% of these radicals being methyl radicals, and having a viscosity ranging from 5 to 1000 mPa.s at 25°C, reactant (b) being used in an amount such that the molar ratio of the hydride functional groups of (b) to the vinyl groups of (a) is between 1.1 and 4;
   (c) a catalytically effective amount of a platinum catalyst;
   (d) 0 to 120 part(s) by weight of siliceous filler(s) per 100 parts by weight of the combination of polyorganosiloxanes (a) + (b).

5. Use according to Claim 4, **characterized in that** up to 100% by weight of reactant (a) is replaced with a polyorganosiloxane resin containing from 0.1 to 20% by weight of one or more vinyl groups in its structure, the said structure having at least two different units chosen from M (triorganosiloxyl), D (diorganosiloxyl), T (monoorganosiloxyl) and Q ($SiO_{4/2}$) units, at least one of these units being a T or Q unit, it being possible for the vinyl group (s) to be carried by the M, D and/or T units.

**6.** Use according to Claims 2 to 5, **characterized in that** the polyorganosiloxane compositions D are those one-component or two-component compositions crosslinking with the heat from polyaddition reactions, called LSR compositions, these compositions satisfying the definitions given above in claim 4 or 5 with regard to so-called RTV compositions, except with regard to the viscosity of the vinyl-containing polydiorganosiloxane reactant (a) which this time lies within the range going from a value greater than 100,000 mPa.s to 500,000 mPa.s.

**7.** Use according to Claim 2 or 3, **characterized in that** the polyorganosiloxane compositions D are those one-component or two-component compositions crosslinking with the heat from polyaddition reactions, called polyaddition EVC compositions, which comprise:

(a') 100 parts by weight of polydiorganosiloxane gum which is a linear homopolymer or copolymer having at least 2 vinyl groups per molecule, these vinyl groups being linked to different silicon atoms and located in the chain and/or at the chain ends, the other organic radicals of which, linked to the silicon atoms, are chosen from methyl, ethyl and phenyl radicals, at least 60 mol% of these other radicals being methyl radicals, and the said gum having a viscosity of greater than 500,000 mPa.s at 25°C;
(b') at least one polyorganohydrosiloxane chosen from linear, cyclic or network homopolymers and copolymers having at least 3 hydrogen atoms per molecule, these hydrogen atoms being linked to different silicon atoms, and the organic radicals of which, linked to the silicon atoms, are chosen from methyl, ethyl and phenyl radicals, at least 60 mol% of these radicals being methyl radicals, and having a viscosity ranging from 5 to 1000 mPa.s at 25°C, reactant (b') being used in an amount such that the molar ratio of the hydride functional groups of (b') to the vinyl groups of (a') is between 0.4 and 10;
(c') a catalytically effective amount of a platinum catalyst;
(d') 0.5 to 120 parts by weight of siliceous filler(s) per 100 parts by weight of the combination of polyorganosiloxanes (a') + (b') .

**8.** Use according to Claim 2 or 3, **characterized in that** the polyorganosiloxane compositions D are those one-component compositions, called EVC compositions, comprising:

(a") 100 parts by weight of a polydiorganosiloxane gum which is a linear homopolymer or copolymer having at least 2 vinyl groups per molecule, these vinyl groups being linked to different silicon atoms and located in the chain and/or at the chain ends, the other organic radicals of which, linked to the silicon atoms, are chosen from methyl, ethyl and phenyl radicals, at least 60 mol% of these other radicals being methyl radicals, and the said gum having a viscosity of at least 1,000,000 mPa.s at 25°C;
(b") 0.1 to 7 parts by weight of an organic peroxide;
(c") 0.5 to 120 parts by weight of siliceous filler(s) per 100 parts by weight of gum (a").

**9.** Articles made of silicone elastomer having good arc-tracking and arc-erosion resistance properties, as well as good flame-resistance properties and good mechanical properties, **characterized in that** they are obtained by crosslinking:

- **o** polyorganosiloxane compositions D as defined in any one of Claims 2 to 8,
- **o** containing a property-enhancing additive formed from a mixture essentially consisting of:
  - platinum in the form of a complex or compound of platinum or of cerium (IV) hydroxide; or
  - platinum in the form of a platinum complex or compound and a combination of cerium (IV) hydroxide and titanium oxide $TiO_2$.

**10.** Articles according to Claim 9, **characterized in that** they consist of electrical insulation materials, medium-voltage and high-voltage insulators, cable termination accessories, cable joints, anode caps for television tubes and moulded objects or extruded articles for the aeronautics industry.

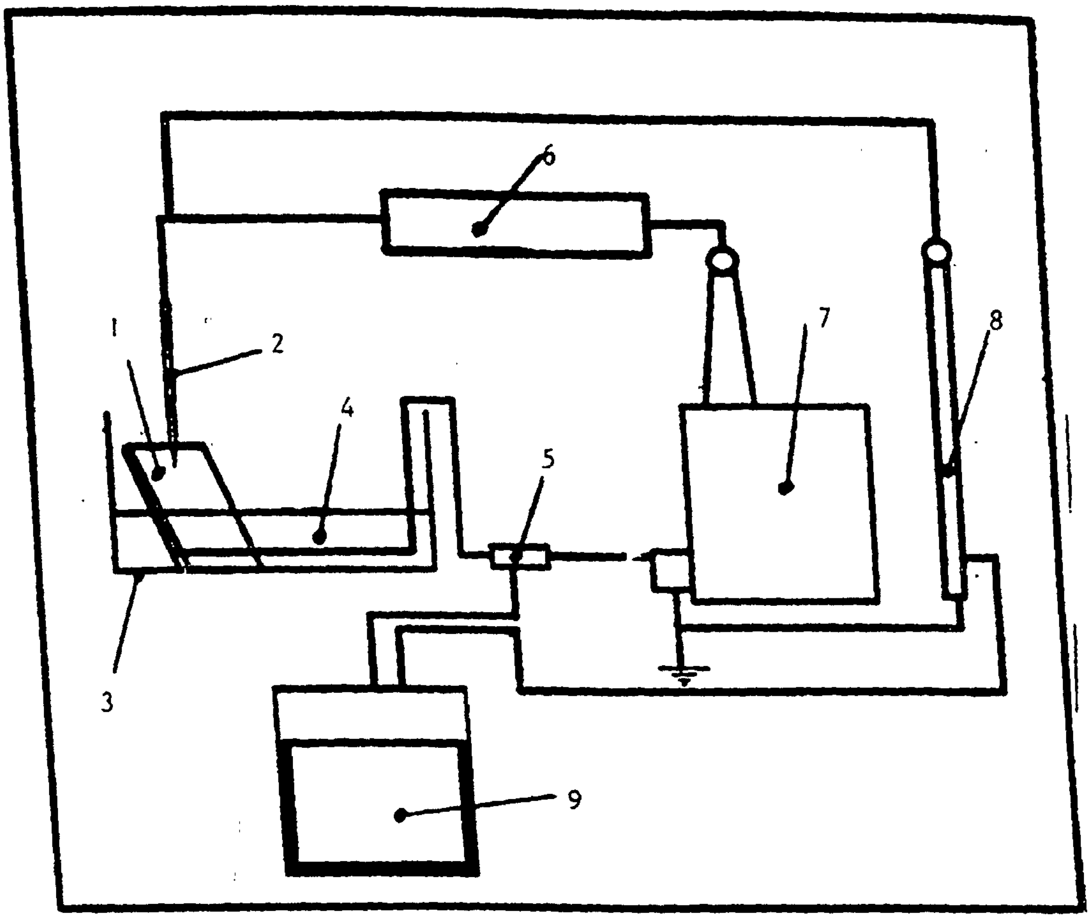


FIG. 1

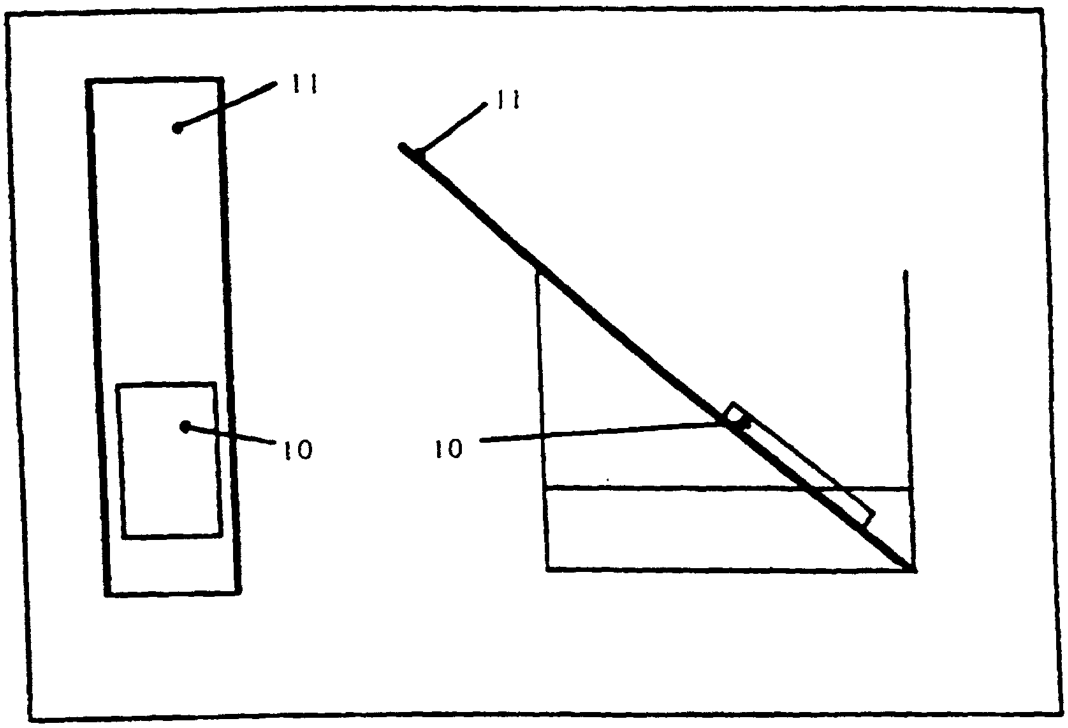


FIG. 2

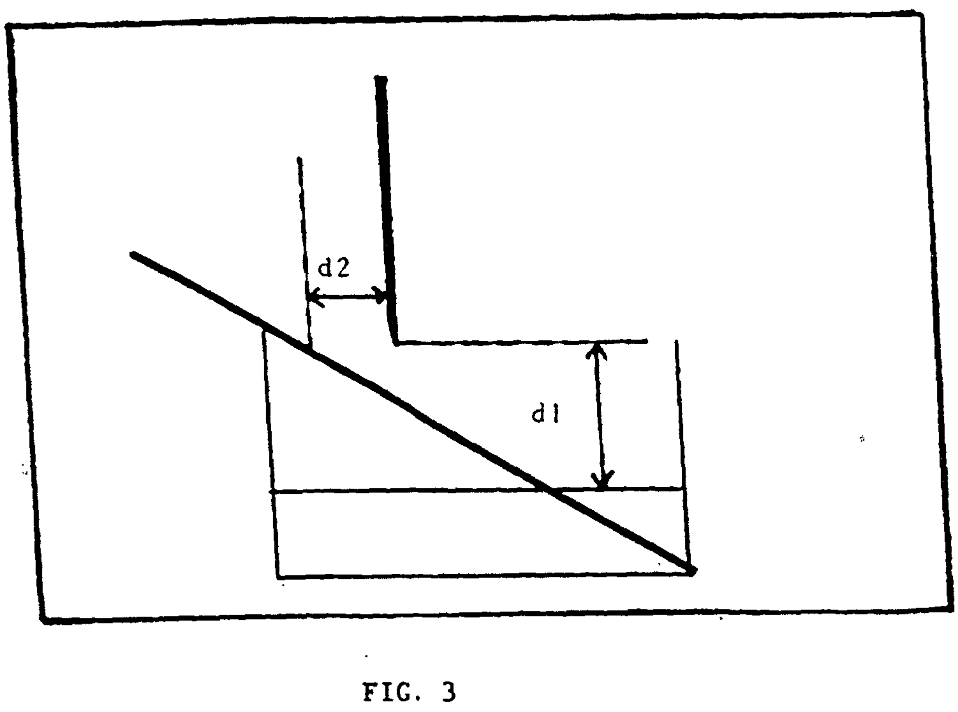


FIG. 3

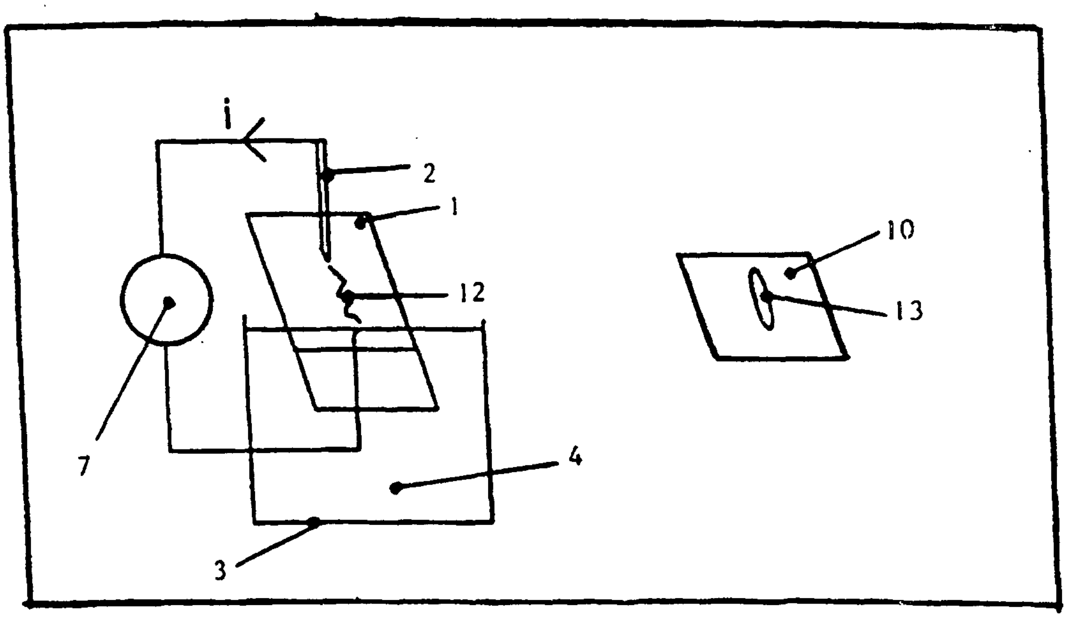


FIG. 4